Europäisches Patentamt

**European Patent Office**

Office européen des brevets

(11) Veröffentlichungsnummer: **0 043 121**
A1

# (12) EUROPÄISCHE PATENTANMELDUNG

(21) Anmeldenummer: **81104970.9**

(22) Anmeldetag: **26.06.81**

(51) Int. Cl.³: **C 08 F 8/30**
C 02 F 1/56, C 08 F 20/60
D 21 H 3/38

(30) Priorität: **28.06.80 DE 3024396**

(43) Veröffentlichungstag der Anmeldung:
**06.01.82 Patentblatt 82/1**

(84) Benannte Vertragsstaaten:
**AT BE CH DE FR GB IT LI LU NL SE**

(71) Anmelder: **Benckiser-Knapsack GmbH**
**Dr. Albert-Reimann-Strasse 2**
**D-6802 Ladenburg(DE)**

(72) Erfinder: **Weber, Hermann, Dr. Dipl.-Chem**
**Schlossstrasse 43**
**D-6944 Hemsbach(DE)**

(72) Erfinder: **Sommer, Klaus, Dr. Dipl.-Chem.**
**Greifstrasse 28**
**D-6900 Heidelberg 1(DE)**

(72) Erfinder: **Ehret, Werner**
**Richard-Wagner-Strasse 50**
**D-6901 Wilhelmsfeld(DE)**

(74) Vertreter: **Patentanwälte Zellentin**
**Zweibrückenstrasse 15**
**D-8000 München 2(DE)**

(54) **Modifizierte, hochmolekulare Polycarbonsäureamide, ein Verfahren zu ihrer Herstellung und ihre Verwendung.**

(57) Modifizierte, hochmolekulare Polycarbonsäureamide, die durch eine Reaktion eines quaternisierten Polyamins, in welchem eine sekundäre Aminogruppe vorher methyloliert wurde, an ein Polyacrylamid oder Polymethacrylamid mit einem Molgewicht $1 \times 10^6$ bis $5 \times 10^6$ g/Mol erhalten wurden. Die neuen Polymeren sind in einfacher Weise herstellbare sehr wirksame, wasserlösliche Retentionsmittel bei der Papierherstellung und Flockungshilfsmittel bei der Wasseraufbereitung.

EP 0 043 121 A1

0043121

PATENTANWÄLTE
ZELLENTIN
ZWEIBRÜCKENSTR. 15
8000 MÜNCHEN 2

Benckiser-Knapsack GmbH                26.Juni 1981
6802 Ladenburg                         Eu 81 049


Modifizierte, hochmolekulare Polycarbonsäureamide, ein
Verfahren zu ihrer Herstellung und ihre Verwendung


Hochmolekulare Polyacrylamide finden zunehmend Verwendung in verschiedenen Bereichen. Als Hilfsmittel bei der Papierherstellung fördern sie die Entwässerung der Papiersuspension auf dem Sieb und erhöhen somit die Leistung der Papiermaschinen. Aufgrund ihrer hohen Molgewichte und ihrer substantiven Eigenschaften besitzen Polyacrylamide eine ausgeprägte Retentionswirkung auf Füllstoffe und Fasern.

Als Flockungshilfsmittel beschleunigen Polycarbonsäureamide das Absetzen der Fällungsprodukte und fördern hierdurch Klär- und Filtrationsverfahren. Kationenaktive Polyacrylamide dienen insbesondere zur Flockung kommunaler und biologischer Abwässer, die überwiegend anionischen Charakter besitzen. Beim Flockungsvorgang werden die langen Kettenmoleküle der kationenaktiven Hochpolymeren von verschiedenen anionenaktiven Schwebstoffteilen adsorbiert. Dabei agglomerieren die Teilchen und fallen aus. Die Stärke der auftretenden Flockung wird durch verschiedene Faktoren beeinflußt, insbesondere durch Adsorbtionsintensität des Polymers an die Oberfläche der Feststoffteilchen.

0043121

In der DE-AS 17 95 705 wird die Herstellung von hochmolekularen wasserlöslichen Polyacrylamiden und deren Verwendung als Fällmittel von anorganischen Suspensionen beschrieben. Die Verwendung von Polymerisaten zur Entwässerung ist bereits aus der US-PS 3 332 979 bekannt. Die Herstellung dieser Polymere erfolgt durch Umsetzen von Polyacrylamid bzw. Polymethacrylamid mit Formaldehyd und N,N-Dialkylamin. Da sich jedoch leicht vernetzte Polymere bilden, die in Wasser kaum noch löslich sind, können diese Produkte nicht für den gewünschten Zweck angewandt werden.

Überraschend wurde nun gefunden, daß man in einfacher Weise sehr wirksame, wasserlösliche Retentions- und Flockungshilfsmittel durch Pfropfreaktion eines quaternisierten Polyamins, in welchem eine sekundäre Aminogruppe vorher methyloliert wurde, an ein Polyacrylamid bzw. Polymethacrylamid mit einem Molgewicht $1 \times 10^6$ bis $5 \times 10^6$ g/Mol erhält. Die Vorteile einer solchen Verfahrensweise liegen im einfachen Arbeiten bei relativ niedrigen Temperaturen in wäßriger Phase, ohne daß dabei umweltbelastende Spaltprodukte entstehen, sowie in der gezielten Herstellbarkeit definierter hochpolymerer Polyamide, wobei je nach verschiedenen Pfropfungsgraden schwach-, mittel- bis starkkationenaktive N-substituierte Polyacrylamide gebildet werden.

Zur Herstellung dieser Produkte verfährt man so, daß man die Polyamine, die eine sekundäre Aminogruppe enthalten, mit Formaldehyd methyloliert, die tertiären Aminogruppen quaternisiert und anschließend mit dem Polycarbonsäureamid umsetzt.

Als Polyamine eignen sich beispielsweise N,N,N'-Trialkyl-1,2-diaminoäthane, N,N,N'-Trialkyl-1,2- und -1,3-diamino-propane, N-Alkylpiperazine, N-Alkylamino-pyridine, N-Aminoalkyl-morpholine und N,N,N'-Trialkyl-phenylendiamine. Die Alkylgruppen dieser Amine können zusätzlich Hydroxy- sowie Carboxygruppen tragen. Anstelle der Alkylgruppen können auch Cycloalkyl- und Aralkyl- sowie Arylgruppen als Substituenten am Stickstoffatom auftreten. Als Quaternisierungsmittel dienen Dialkylsulfate, wie beispielsweise Dimethylsulfat, Alkylchloride, Alkylbromide oder Alkyljodide wie beispielsweise 1,2-Chloräthanol oder Methylbromid sowie mittelstarke und starke Säuren wie zum Beispiel Phosphorsäure oder Schwefelsäure.

Um einen vollständigen Umsatz zu erzielen, ist es nicht sinnvoll, von gealterten Polycarbonsäureamiden auszugehen, sondern Acryl- bzw. Methacrylamid in bekannter Weise bei Temperaturen von 50 bis 90°C mittels eines Redox-Systems zu polymerisieren und anschließend sofort der Pfropfung mittels des quaternisierten, methylolierten Amins zu unterwerfen, wobei Polyamid-Konzentrationen von 5% tunlichst nicht überschritten werden sollten, um die Bildung vernetzter schwerlöslicher Produkte zu unterdrücken.

Die so erhaltenen Produkte zeichnen sich durch sehr gutes Retentionsvermögen sowie als wirksame Flockungshilfsmittel aus.

Zur Beurteilung des Retentionsvermögens wurde die Entwässerungsdauer einer 0,3prozentigen Faserstoff-Suspension nach der Schopper-Riegler-Methode (Merkblatt V/7/61, Verein der Zellstoff- und Papier-Chemiker und -Ingenieure) bestimmt:

| | | | |
|---|---|---|---|
| Ohne Zusatz | 270 | sec | SR |
| Produkt nach Beispiel 1 | 74 | sec | SR |
| Produkt nach Beispiel 2 | 72 | sec | SR |
| Produkt nach Beispiel 3 | 67 | sec | SR |
| Kat. Polyacrylamid | 155 | sec | SR |
| Polyäthylenimin | 98 | sec | SR |

Um die Wirksamkeit als Flockungshilfsmittel zu beurteilen, wurden Flockungsversuche durchgeführt. Hierzu wurden 500 ml Faulschlamm mit einem Feststoffgehalt von 2,4% und einem pH-Wert von 8,0 mit 15 ml einer 0,5prozentigen Lösung des jeweiligen Polymers, entsprechend einer Einsatzmenge von 150 g Flockungshilfsmittel pro Kubikmeter Faulschlamm, versetzt und nach vorsichtigem Durchmischen über einen Selecta-Faltenfilter Nr. 595 1/2 x 32 cm filtriert, wobei man die für die jeweiligen Filtratmengen erforderliche Zeit bestimmte:

| Filtratmenge (ml) | 50 | 100 | 150 | 200 |
|---|---|---|---|---|
| ohne Zusatz | > 300 sec | - | - | - |
| Polymer nach Beispiel 1 | 12,5 sec | 30,5 sec | 67,0 sec | 132,0 sec |
| Polymer nach Beispiel 2 | 13,0 sec | 32,0 sec | 69,0 sec | 135,5 sec |
| Polymer nach Beispiel 3 | 12,0 sec | 29,5 sec | 60,0 sec | 117,5 sec |
| Polyacrylamid (handelsübl.) | 14,0 sec | 36,5 sec | 96,0 sec | 154,0 sec |
| Polyacrylamid (handelsübl.) | 21,5 sec | 63,0 sec | 122,0 sec | 235,0 sec |

Beispiel 1

In einem 2 Liter Dreihalskolben mit Rührer, Thermometer, Rückflußkühler und Tropftrichter werden 19,68 g N-Methylpiperazin (98prozentig) vorgelegt und 19,25 g 30prozentige Formalinlösung zugetropft. Die Temperatur steigt während der Zugabe auf 60 bis 70°C an. Nach beendeter Zugabe erwärmt man die Lösung 1 Stunde lang auf 85°C und verdünnt mit 40 ml Wasser. Dann tropft man 28,2 g Dimethylsulfat (97prozentig) so zu, daß die Reaktionstemperatur 90°C nicht überschreitet. Anschließend hält man das Gemisch 1 Stunde lang auf 80 bis 90°C, gibt unter kräftigem Rühren 737,15 ml Wasser und 500 g einer 3,65prozentigen Lösung von Polyacrylamid mit einem mittleren Molgewicht von $1,5 \times 10^6$ g/Mol unter kräftigem Rühren zu und erwärmt weitere 2 Stunden auf 80 bis 90°C. Das so erhaltene Produkt zeigte einen pH-Wert von 5,0 $\pm$ 0,2, eine Viskosität von 1.200 mPa·s und besaß einen Wirkstoffgehalt von rund 5%.

Beispiel 2

19,67 g N,N,N'-Trimethyl-1,2-diaminoäthan, hergestellt durch Reaktion von Dimethylamin mit N-Methylaziridin, werden mit 19,25 g 30prozentiger Formaldehydlösung bei 75°C methyloliert, mit 75 ml Wasser verdünnt und anschließend mit 28,2 g Dimethylsulfat (97prozentig) quaternisiert. Man verdünnt mit 700 ml Wasser und fügt unter kräftigem Rühren eine 3,65prozentige Lösung eines Polyacrylamids mit einem mittleren Molgewicht von $1,5 \times 10^6$ g/Mol zu und hält die Mischung 2 1/2 Stunden bei 85°C.

## Beispiel 3

In einem 2 Liter Dreihalskolben mit Rührer, Thermometer, Rückflußkühler und Tropftrichter werden 19,68 g N-Methylpiperazin (98prozentig) vorgelegt und 19,25 g Formaldehydlösung (30prozentig) zugetropft. Die Reaktionstemperatur sollte hierbei 70°C nicht übersteigen. Nach beendeter Zugabe erhitzt man die Mischung 1 Stunde lang auf 80 bis 90°C und fügt unter gutem Rühren 4,37 g 25prozentiges Ammoniak, 500 g einer 3,65prozentigen Polyacrylamidlösung eines mittleren Molgewichts von $1,5 \times 10^6$ g/Mol zu. Nach 20minütigem Stehen werden 6 g einer 18,65prozentigen Salzsäure und 446,9 ml Wasser zugegeben, die Mischung gut gerührt, 2 Stunden bei 70°C gehalten. Die so hergestellte Reaktionsmischung besaß einen Wirkstoffgehalt von rund 4,5% und zeigte einen pH-Wert von ~ 9 und eine Viskosität von 1.500 mPa·s.

PATENTANWÄLTE
ZELLENTIN
ZWEIBRÜCKENSTR. 15
8000 MÜNCHEN 2

26. Juni 1981

Benckiser-Knapsack GmbH  AS/Hu

6802 Ladenburg  Eu 81 049

Patentansprüche:

1. Modifizierte, hochmolekulare Polycarbonsäureamide, gekennzeichnet durch einen Gehalt an methylolierten und quaternisierten Polyamino-Verbindungen, die eine sekundäre Aminogruppe enthalten, als Substituenten und einem Molgewicht von 1 bis 5 x $10^6$ g/Mol.

2. Modifizierte, hochmulekulare Polycarbonsäureamide nach Anspruch 1, gekennzeichnet durch einen Gehalt an methyloliertem und quaternisiertem N-Methylpiperazin als Substituenten.

3. Modifizierte, hochmolekulare Polycarbonsäureamide nach Anspruch 1, gekennzeichnet durch einen Gehalt an methyloliertem und quaternisiertem N,N,N'-Trimethyl-1,2-diaminoäthan als Substituenten.

4. Verfahren zur Herstellung von modifizierten, hochmolekularen Polycarbonsäureamiden, dadurch gekennzeichnet, daß man Polycarbonsäureamide einer Pfropfreaktion mit einem Polyamin, das vorher an einer sekundären Aminogruppe methyloliert und anschließend quaternisiert wurde, unterwirft.

5. Verfahren nach Anspruch 4, dadurch gekennzeichnet, daß man als Amin N-Methylpiperazin einsetzt, das mit Formaldehyd methyloliert und mit Dialkylsulfat, Alkylhalogenid bzw. mit einer mittelstarken oder starken Säure quaternisiert wurde.

6. Verfahren nach Anspruch 4, dadurch gekennzeichnet, daß man als Amin N,N,N'-Trimethyl-1,2-diaminoäthan einsetzt, das mit Formaldehyd methyloliert und anschließend quaternisiert wurde.

7. Verfahren nach Anspruch 4, dadurch gekennzeichnet, daß man als Polycarbonsäureamide Polyacrylamid, Polymethacrylamid oder deren Copolymere einsetzt.

8. Verwendung der modifizierten, hochmolekularen Polycarbonsäureamide nach Anspruch 1 als Retentionsmittel bei der Papierherstellung.

9. Verwendung der modifizierten, hochmolekularen Polycarbonsäureamide nach Anspruch 1 als Flockungshilfsmittel in der Abwasseraufbereitung.

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | Patents Abstracts of Japan Band 3, Nr. 79, 6. Juli 1979 Seite 83C51 & JP - A - 54 - 55091 -- | 1,9 |
| | DE - A - 2 206 564 (ALLIED COLLOIDS MA- NUFACTURING CO.) * Seite 2, Zeilen 15 bis 18; Seite 4, Beispiele 2, 3 * -- | 1,9 |
| A | DE - A1 - 2 557 451 (SUMITOMO CHEMICAL CO.) * Patentanspruch 1; Seite 2, Zeilen 3 bis 5 * -- | |
| A | DE - A1 - 2 721 960 (SANDOZ-PATENT-GMBH) * Patentansprüche 1, 8, 23 * ---- | |

### KLASSIFIKATION DER ANMELDUNG (Int. Cl.³)

C 08 F 8/30
C 02 F 1/56
C 08 F 20/60
D 21 H 3/38

### RECHERCHIERTE SACHGEBIETE (Int. Cl.³)

C 02 F 1/00
C 08 F 8/00
C 08 F 20/00
C 08 F 120/00
C 08 F 220/00
D 21 H 3/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 22-09-1981 | KRAIL |

EPA form 1503.1 06.78